**Europäisches Patentamt**

**European Patent Office**

**Office européen des brevets**

(19)

(11) Numéro de publication : **0 367 672 B1**

(12)

# FASCICULE DE BREVET EUROPEEN

(45) Date de publication du fascicule du brevet :
**10.06.92 Bulletin 92/24**

(51) Int. Cl.$^5$ : **F16B 13/04, F16B 13/10**

(21) Numéro de dépôt : **89403003.0**

(22) Date de dépôt : **31.10.89**

(54) **Cheville pour trou d'ancrage à contre-dépouille.**

(30) Priorité : **04.11.88 FR 8814405**

(43) Date de publication de la demande :
**09.05.90 Bulletin 90/19**

(45) Mention de la délivrance du brevet :
**10.06.92 Bulletin 92/24**

(84) Etats contractants désignés :
**BE DE ES FR GB IT SE**

(56) Documents cités :
**EP-A- 0 067 941**
**EP-A- 0 156 115**
**EP-A- 0 163 120**

(73) Titulaire : **SOCIETE DE PROSPECTION ET D'INVENTIONS TECHNIQUES SPIT**
**Route de Lyon**
**F-26501 Bourg-Les-Valence Cédex (FR)**

(72) Inventeur : **Gauthier, Alain**
**Saint Jean de Muzols**
**F-07300 Tournon (FR)**
Inventeur : **Barthomeuf, Jean-Paul**
**Alixan**
**F-26300 Bourg de Peage (FR)**
Inventeur : **de Neergaard, André**
**52 rue de Chapotte**
**F-07300 Tournon (FR)**

(74) Mandataire : **Bloch, Gérard et al**
**2, square de l'Avenue du Bois**
**F-75116 Paris (FR)**

EP 0 367 672 B1

## Description

La présente invention concerne une cheville pour trou d'ancrage à contre-dépouille comportant une tige de traction pourvue d'une extrémité de fixation d'une pièce à fixer et d'une extrémité conique d'ancrage destinée à être disposée au moins en partie dans la contre-dépouille du trou d'ancrage, plusieurs éléments à patte expansible formant une bague d'expansion, une entretoise tubulaire autour de la tige de traction, prenant appui contre un épaulement annulaire transversal ménagé sur la bague d'expansion, et destinée à entraîner les pattes expansibles de la bague en coopération avec l'extrémité conique de la tige de traction pour provoquer leur expansion dans la contre-dépouille.

Des chevilles de ce type sont utilisées pour la fixation de pièces en zone tendue d'un matériau de construction, par exemple la sous-face d'une dalle en béton. Plus particulièrement, ces chevilles sont prévues pour rester suffisamment ancrées même si une fissure se forme dans leur zone de réception.

On connaît déjà une cheville du type mentionné ci-dessus par le document EP-A1-0 226 524. Cette cheville présente deux inconvénients. Il faut usiner dans les éléments constitutifs de la bague d'expansion une gorge d'articulation ou de pliage pour former au-delà de celle-ci la patte expansible.

L'épaulement annulaire de la bague servant d'appui à l'entretoise est ménagé à proximité du plan de l'extrémité de la bague tournée vers l'extrémité de fixation de la tige de traction de sorte qu'après expansion les éléments de la bague sont écartés de la tige de traction sur pratiquement toute leur longueur axiale, entre le plan de l'épaulement annulaire et le plan de coopération entre les pattes expansibles et l'extrémité conique de la tige de traction, créant ainsi un vide préjudiciable à la résistance de l'ancrage.

La présente invention vise en particulier à pallier ces inconvénients.

Certes, on connaît aussi une cheville d'un type similaire à celui mentionné ci-dessus par le document EP-A2-0067941. Mais, dans cette cheville, les pattes d'expansion sont formées entre des fentes ménagées dans l'entretoise elle-même et, comme dans l'autre cheville de l'art antérieur déjà considérée, au-delà des gorges d'articulation usinées à cet effet. Les pattes d'expansion et le reste de l'entretoise ayant des fonctions respecptives différentes, le matériau, unique, de l'entretoise n'est pas toujours bien adapté à l'une ou l'autre de ces fonctions. De plus, la résistance de l'ancrage pourrait parfois laisser à désirer à cause du défaut d'expansion en face des fentes.

La présente invention concerne donc une cheville du type mentionné ci-dessus, caractérisée par le fait que les éléments de la bague d'expansion, du côté opposé à leur patte expansible, s'étendent, au-delà de la zone de l'épaulement annulaire transversal, entre l'entretoise et la tige de traction en offrant à l'entretoise une surface d'appui cylindrique longitudinale, de longueur sensiblement comparable à celle des pattes d'expansion, la zone de l'épaulement annulaire transversal formant zone d'articulation des pattes d'expansion.

Grâce au bon appui de l'entretoise sur les éléments d'expansion, les portions d'élément d'expansion de la bague d'expansion, qui s'étendent entre l'entretoise et la tige de traction, restent plaquées contre la tige de traction, ce qui améliore la résistance de l'ancrage réalisé avec la cheville de l'invention. Cette résistance est aussi accrue par l'absence de vide entre les éléments adjacents de la bague d'expansion.

Dans la forme de réalisation préférée de la cheville de l'invention, l'épaisseur transversale des pattes d'expansion est égale à au moins deux fois celle des portions d'élément d'expansion, en l'occurrence des jambes de maintien les prolongeant, maintenues entre l'entretoise et la tige de traction.

L'expansion obtenue avec la cheville de l'invention est ainsi excellente.

Avantageusement, les portions d'élément d'expansion prolongeant les pattes expansibles sont maintenues entre l'entretoise et une portion de section rétrécie de la tige de traction.

Avantageusement encore, l'épaisseur transversale de l'entretoise est égale à la différence entre l'épaisseur des pattes expansibles à celle des portions d'élément d'expansion les prolongeant.

Dans ce cas, l'entretoise peut être un tube de section annulaire constante ou présenter cette épaisseur au-delà d'un épaulement annulaire dégaeant un espace annulaire de réception des portions d'élément d'expansion prolongeant les pattes expansibles.

La bague d'expansion peut comprendre au moins deux éléments de coquille réalisés, chacun, à partir d'un flanc de tôle découpé, en partie replié sur lui-même sur au moins deux épaisseurs, pour former une patte expansible, et roulé.

Mais de préférence, la bague d'expansion comprend au moins deux éléments de coquille monoblocs, avantageusement obtenus à partir d'un élément tubulaire ensuite fendu.

Dans ce cas, l'élément tubulaire de départ a un diamètre intérieur avantageusement supérieur au diamètre de la tige de traction, pour ne pas perdre surface d'expansion.

De préférence, les éléments d'expansion comportent des moyens de verrouillage des éléments sur l'entretoise, assurant l'assemblage de l'entretoise, de la bague d'expansion et de la tige de traction.

Dans une forme de réalisaiton intéressante de l'invention, les pattes expansibles de la bague d'expansion sont agencées pour pouvoir, par frappe et rotation de la bague d'expansion, forer la contre-dépouille du trou d'ancrage.

L'invention sera mieux comprise à l'aide de la description suivante de plusieurs formes de réalisation de la cheville de l'invention, en référence aux dessins annexés, sur lesquels

– la figure 1 représente une vue d'une première forme de réalisation de la cheville de l'invention, après ancrage, en coupe axiale partielle selon le plan I-I de la figure 3;

– la figure 2 représente une vue en plan du flanc de tôle découpé d'une des demi-coquilles de la bague d'expansion de la cheville de la figure 1;

– la figure 3 représente une vue en bout de la bague d'expansion de la cheville de la figure 1;

– la figure 4 représente une vue de la bague d'expansion de la cheville de la figure 1, en coupe selon le plan IV-IV de la figure 3;

– la figure 5 représente une vue de la bague d'expansion en coupe selon le plan V-V de la figure 4;

– les figures 6 illustrent l'ancrage de la cheville des figures 1-5, soit le forage du trou d'ancrage (6A), la formation de la contre-dépouille (6B), l'introduction de la cheville dans le trou (6C), l'ancrage de la cheville dans le trou (6D) et la fixation d'une pièce (6E) ;

– la figure 7 représente une vue d'une deuxième forme de réalisation de la cheville de l'invention, avant ancrage, en demi-coupe axiale partielle selon le plan VII-VII de la figure 8 ;

– la figure 8 représente une vue en bout de la bague d'expansion de la cheville de la figure 7 ;

– la figure 9 représente une vue d'une troisième forme de réalisation de la cheville de l'invention, après ancrage, en coupe axiale partielle selon le plan IX-IX de la figure 11 ;

– la figure 10 représente une vue en plan du flanc de tôle découpé d'une des demi-coquilles de la bague d'expansion de la cheville de la figure 9 ;

– la figure 11 représente une vue en bout de la bague d'expansion de la cheville de la figure 9 ;

– la figure 12 représente une vue de la bague d'expansion de la cheville de la figure 9, en coupe selon le plan XII-XII de la figure 11, et

– la figure 13 représente une vue en bout de la bague d'expansion d'une quatrième forme de réalisation de la cheville de l'invention.

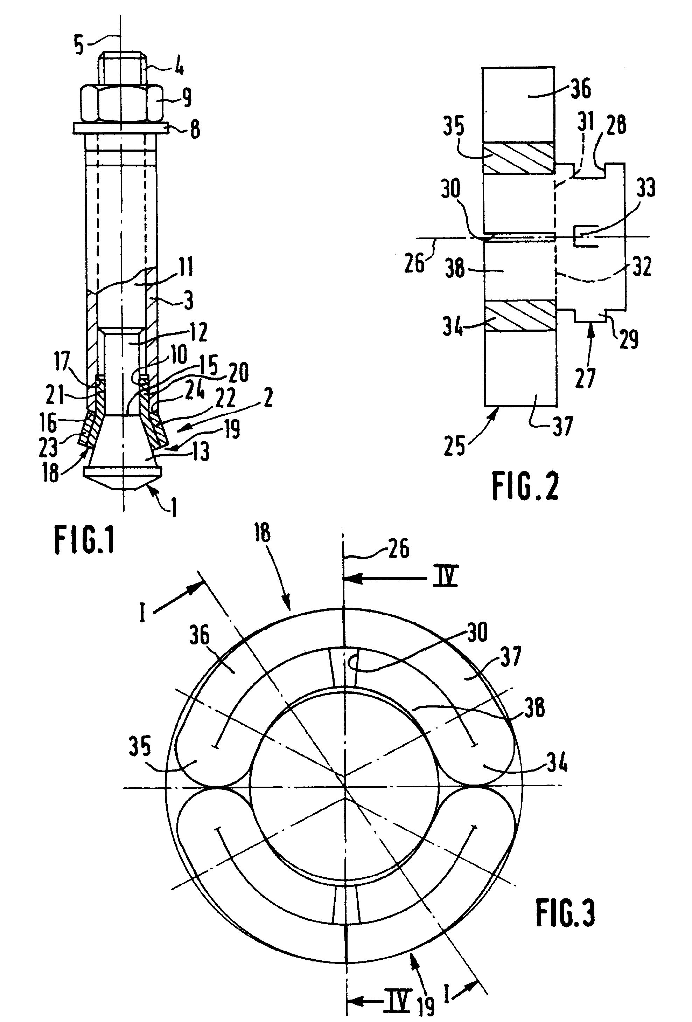

La cheville de la figure 1 comporte une tige d'ancrage et de traction cylindrique 1, d'axe 5, une bague d'expansion 2 et une entretoise 3.

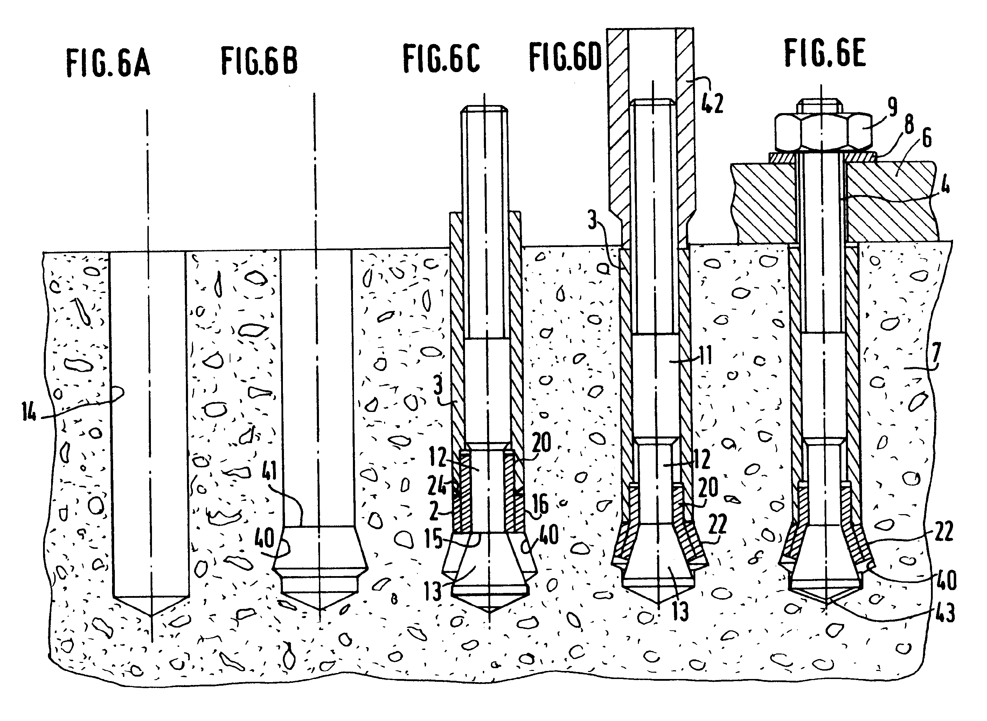

La tige 1 est pourvue d'une extrémité fileté 4, pour la fixation d'une pièce 6 à un matériau 7, par l'intermédiaire d'une rondelle 8 et d'un écrou 9 coopérant avec le filetage de cette extrémité 4 (fig. 6E). L'extrémité 4 de la tige 1 se prolonge par un corps de tige 11 de même section, qui lui-même se prolonge par une portion de tige 12 de section rétrécie. L'autre extrémité 13 de la tige 1, prolongeant la portion rétrécie 12, a une forme tronconique pour l'expansion de la bague 2 et l'ancrage de la cheville, s'évasant depuis le plan de la section 15 commune à cette extrémité tronconique et à la portion rétrécie 12.

L'entretoise 3 est une portion de tube de diamètre intérieur sensiblement égal au diamètre du corps de tige 11 et de diamètre extérieur sensiblement égal au diamètre du trou d'ancrage 14 destiné à recevoir la cheville. A une distance déterminée de son extrémité frontale 16 d'entraînement en expansion de la bague 2, un épaulement annulaire intérieur 17 est ménagé sur l'entretoise pour dégager une gorge annulaire, entre l'entretoise et la portion de tige rétrécie 12, pour la réception d'une partie de maintien de la bague 2. La surface annulaire d'extrémité frontale 16 de l'entretoise 3 est tronconique, à génératrice sensiblement orthogonale à celle de la surface tronconique de l'extrémité 13 de la tige de traction et ébasée en sens inverse. Toutefois, l'extrémité frontale de l'entretoise 3 pourrait aussi comporter, adjacente à son bord intérieur, une surface annulaire orthogonale à son axe 5, et à laquelle se raccroderait un chanfrein tronconique.

La bague d'expansion 2 comprend deux demi-coquilles 18 et 19 comportant, chacune, une jambe de maintien 20, 21 reçue entre la portion de tige rétrécie 12 et l'entretoise 3 et prolongée par une patte d'expansion 22, 23, sensiblement de même longueur axiale, mais d'épaisseur double de celle de la jambe de maintien, ménageant ainsi un épaulement annulaire extérieur 24 de coopération avec la surface annulaire d'extrémité frontale 16 de l'entretoise 3. L'épaisseur des jambes de maintien est sensiblement égale à celle de l'entretoise et de l'espace annulaire entre l'entretoise et la portion de tige rétrécie 12. L'entretoise 3, la bague d'expansion 2 et la tige 1 sont maintenues assemblées, en position de repos et de manutention, par des moyens de verrouillage qui seront abordés plus loin.

La longueur axiale des jambes de maintien 20, 21 de la bague d'expansion est très légèrement inférieure à la distance du plan d'épaulement annulaire 17 à l'extrémité tronconique 16 de l'entretoise 3. La longueur axiale de la bague 2, soit la somme de celles des jambes de maintien et des pattes d'expansion, est sensiblement égale à celle de la portion de tige rétrécie 12.

En position de repos (figure 6C), la surface extérieure de la bague 2 prolonge la surface cylindrique extérieure de l'entretoise 3, et le plan de l'extrémité libre des pattes d'expansion 22, 23 est confondu avec celui 15 du raccordement de la portion de tige rétrécie 12 et de l'extrémité d'ancrage 13 de la tige de traction 1. L'entretoise 3, par son extrémité tronconique 16 est en appui transversal contre l'épaulement extérieur 24 de la bague 2. L'entretoise 3, par sa portion adjacente à son extrémité 16, est en appui axial contre la surface cylindrique 10 des jambes de maintien 20, 21, elles-mêmes en appui contre la portion de tige rétrécie 12.

Chaque demi-coquille de la bague d'expansion est obtenue par formage d'un flanc de tôle. En référence à la figure 2, on découpe dans un flanc de tôle rectangulaire, d'épaisseur, de longueur et de largeur appropriées, deux portions rectangulaires à partir de deux coins d'une même longueur du flanc de départ, pour dégager une partie de flanc en forme de T comportant une portion rectangulaire allongée 25, de plan médian 26, prolongée, le long du plan 26, par une plus petite portion rectangulaire 27, sensiblement de même largeur, également de plan médian 26 et de longueur sensiblement moitié de celle de la portion 25. Les petits côtés de la portion 27, parallèles au plan 26, sont découpés pour présenter, l'un, une encoche 28 et, l'autre, une patte correspondante 29. Une fente 30 est dégagée dans la portion 25, le long du plan médian 26, pour ménager deux zones d'articulation ou de pliage 31, 32 s'étendant perpendiculairement au plan 26, le long du côté commun aux deux portions 25, 27. Par poinçonnage de la petite portion 27, dans la zone du plan médian 26, on a dégaé un ergot d'assemblage 33. On rabat les petits côtés de la portion rectangulaire 25, du côté de l'ergot 33, le long de la fente 30 autour de deux zones de pliage 34, 35 prolongeant les petits côtés de la petite portion 27, les ailes 36, 37 de la portion 25 se rabattant sur la partie médiane 38 prolongée par la portion 27, pour former les pattes d'expansion 22, 23. On roule ensuite l'ensemble ainsi obtenu autour d'un mandrin de section identique à la portion de tige rétrécie 12 de la tige d'ancrage.

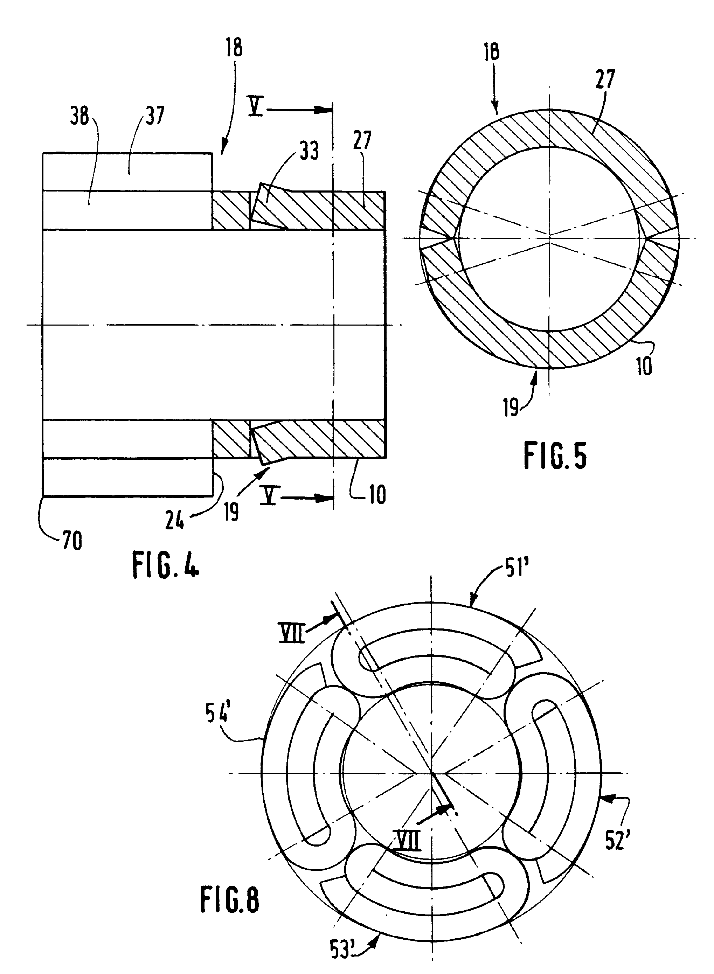

Pour l'assemblage de la cheville, on dispose les deux demi-coquilles 18, 19 autour de la portion de tige rétrécie 12, la patte 29 de l'une venant s'engager dans l'encoche 28 de l'autre pour les maintenir assemblées sur 360° autour de la tige 1, comme représenté sur la figure 5. On glisse ensuite l'entretoise 3 autour de la tige 1 puis autour des portions 27 des demi-coquilles, faisant office de jambes de maintien, jusqu'à ce que l'extrémité 16 de l'entretoise vienne en butée contre l'épaulement 24 ménagé par l'épaisseur des ailes rabattues 36, 37. En franchissant les ergots 33, l'entretoise 3 les repoussent vers l'intérieur mais du fait de leur élasticité, ils s'accrochent sur l'entretoise pour maintenir l'assemblage de la tige 1, de la bague 2 constituée par les deux demi-coquilles et de l'entretoise 3.

On notera que la liaison des demi-coquilles pourrait être réalisée par un assemblage en queue d'aronde et que les ergots de verrouillage pourraient être formés, non pas sur les demi-coquilles, mais sur l'entretoise.

La description de la structure de la cheville ayant été faite, celle de son fonctionnement va maintenant être abordée.

On fore dans un matériau de construction 7, à l'aide d'un foret, un trou 14 de profondeur sensiblement plus grande que la longueur de l'entretoise 3. A l'aide d'un autre foret, on dégage une contre-dépouille 40, à une distance du fond du trou 14 sensiblement égale à la moitié de la longueur axiale de la portion d'extrémité d'ancrage 13 de la tige de traction 1. Plus large que le trou 14, la contre-dépouille est tronconique, évasée vers le fond du trou, à génératrice sensiblement parallèle à celle de la portion d'extrémité 13 de la tige d'ancrage 1 destinée à y être reçue. On introduit ensuite la cheville 1 dans le trou 14, jusqu'à ce que l'extrémité d'ancrage 13 de la tige 1 vienne en fond de trou. Dans cette position, l'extrémité libre des pattes d'expansion 22, 23 s'étend dans le plan 41 de raccordement de la contre-dépouille 40 et du trou 14 et l'entretoise 3 fait saillie hors du trou. A l'aide d'un troisième outil 42, on frappe sur la portion d'entretoise en saillie hors du trou pour provoquer l'expansion de la bague et l'ancrage de la cheville. Les pattes d'expansion 22, 23, par coopération avec l'extrémité tronconique 13 de la tige, s'engagent à force entre la paroi de la contre-dépouille et l'extrémité 13 de la tige, en étant pliées vers l'extérieur autour de leurs zones d'articulation 31, le pliage étant facilité par les fentes 30. La frappe se poursuit jusqu'à ce que l'extrémité annulaire tronconique 16 de l'entretoise 3 se trouve sensiblement dans le plan 41 de raccordement de la contre-dépouille et du trou, en prenant parfaitement appui sur l'épaulement 24 de la bague 2, s'étendant alors le long d'une surface conique à génératrice orthogonale à celle de la surface tronconique de l'extrémité 13 de la tige 1. Dans cet état, la cheville est parfaitement bien ancrée, grâce à la double épaisseur des pattes d'expansion 22, 23 ; la résistance de l'ancrage est également assurée grâce à l'appui mutuel de l'entretoise 3, des jambes de maintien 20, 21 de la bague 2 et de la tige 1.

On dégage ensuite l'outil 42 et il ne reste plus qu'à engager sur la portion filetée 4 de la tige 1 la pièce 6 à fixer au matériau 7, par un trou pratiqué à cet effet, puis la rondelle 8 avant de serrer l'ensemble à l'aide de l'écrou 9. Tout jeu latéral éventuel entre les pattes expansibles 22, 23 et la paroi de la contre-dépouille 40 est éliminé après serrage de l'écrou 9 sur la tige 1 ayant alors fait légèrement remonter la cheville 1 dans le trou, pour dégager un autre jeu, axial, 43 en fond trou, celui-ci n'étant pas préjudiciable à la bonne tenue de l'ancrage.

En position d'ancrage, et en référence à la figure 1, on notera que les jambes de maintien 20, 21 de la bague d'expansion ne viennent pas en butée contre l'épaulement intérieur 17 de l'entretoise, un léger jeu étant ménagé à cet endroit, aussi faible que possible pour limiter au mieux l'usinage de la paroi intérieure de l'entretoise.

En cas de traction sur la tige de la cheville, la coopération des pattes d'expansion et de la paroi de la contre-dépouille maintient la cheville en place. En cas de fissure limitée et admissible pour le reste du matériau, c'est-à-dire en cas d'élargissement du trou 14, la cheville peut légèrement remonter dans le trou mais, et même si la résistance de l'ancrage diminue, elle ne s'annule pas pour autant, grâce au maintien de la coopération, certes par une zone annulaire limitée, de la jupe d'expansion de la bague 2 et de la paroi de la contre-dépouille.

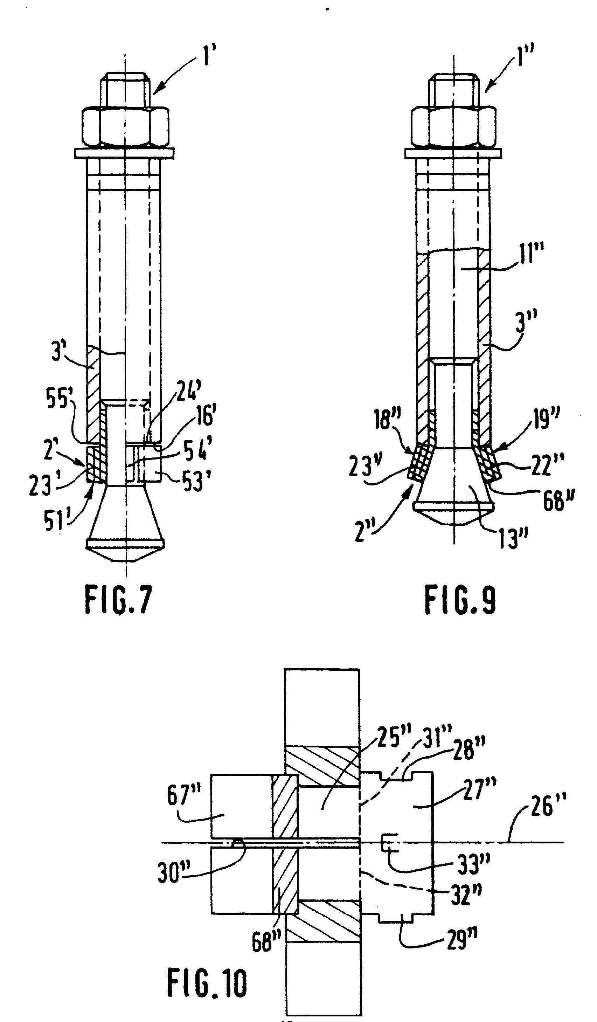

La cheville 1' des figures 7 et 8 est semblable à celle 1 des figures précédentes en tous points, à quelques détails près. L'entretoise 3' est parfaitement tubulaire, sans épaulement intérieur. L'épaisseur du flanc de tôle de départ, pour la formation des éléments de bague, est donc plus mince. Les pattes d'expansion 23' comportent, non plus deux, mais trois épaisseurs de tôle, à la suite des rabattements, l'un sur l'autre, de deux ailes d'une portion rectangulaire de flanc sur la partie centrale de cette portion rectangulaire. La bague d'expansion 2' est constituée, non plus de deux demi-coquilles, mais de quatre quarts de coquille 51'-54' assemblés comme les demi-coquilles 18, 19 de la cheville 1.

On notera, sur la figure 7, la gorge circonférentielle 55' ménagée, en position de repos, entre l'extrémité annulaire tronconique 16' de l'entretoise 3' et l'épaulement annulaire extérieur plan 24' formé par les deux épaisseurs de tôle rabattues sur le prolongement de la portion de maintien de la bague.

L'assemblage de la cheville 1' et son ancrage restent identiques à ceux de la cheville 1.

La cheville 1" des figures 9-12 est aussi semblable à celle 1 des figures 1-6, à quelques caractéristiques près, qui vont être présentées ci-dessous. L'entretoise 3" est parfaitement tubulaire, sans épaulement intérieur. L'épaisseur du flanc de tôle de départ, pour la formation ici aussi des deux demi-coquilles 18", 19", est plus mince. Les pattes d'expansion 22", 23" comportent, non pas deux, mais trois épaisseurs de tôle.

Chaque demi-coquille 18", 19" est obtenue par formage d'un flanc de tôle. En référence à la figure 10, on découpe dans un flanc de tôle rectangulaire, d'épaisseur, de longueur et de largeur appropriées, quatre portions rectangulaires à partir des quatre coins, pour dégager une partie de flanc en forme de croix comportant une portion rectangulaire allongée 25", de plan médian 26", prolongée, le long du plan 26", et des deux côtés, par deux plus petites portions rectangulaires 27", 67", sensiblement de même largeur, également de plan médian 26" et de longueur sensiblement moitié de celle de la portion 25". Les petits côtés de la portion 27", parallèle au plan 26", sont découpés pour présenter, l'un une encoche 28" et, l'autre, une patte correspondante 29". Une fente 30" est dégagée dans les portions 67", 25", le long du plan médian 26", pour ménager deux zones d'articulation ou de pliage 31", 32" s'étendant perpendiculairement au plan 26", le long du côté commun aux deux portions 25", 27". Par poinçonnage de la petite portion 27", dans la zone du plan médian 26", on a dégagé un ergot d'assemblage 33". On rabat la portion 67", autour d'une zone de pliage 68" s'étendant le long du côté commun aux portions 25" et 67", sur la portion 25" avant de poursuivre le formage de chaque demi-coquille 18", 19" comme celui des demi-coquilles 18, 19 de la cheville 1. L'assemblage de la cheville 1" et son ancrage restent identiques à ceux de la cheville 1.

Deux remarques s'imposent à cet endroit.

Les zones de pliage 68" des pattes d'expansion de la bague 2" de la cheville 1" forment des bords arrondis intérieurs facilitant le glissement de la bague sur l'extrémité conique d'expansion 13" de la tige 11" de la cheville 1".

Le bord de la portion de flanc de tôle 25" prolongeant la zone d'articulation 68", dans la bague 2" de la cheville 1", tout comme le bord libre des pattes d'expansion de la bague 2 de la cheville 1, présente une arête extérieure vive 70, 70". Cette arête peut avoir une fonction particulièrement intéressante. Sous réserve que la tôle de départ des éléments d'expansion soit traitée de façon appropriée ou qu'il s'agisse d'un métal fritté, par exemple, la contre-dépouille peut être directement réalisée par cette arête sous l'action d'un outil de frappe et d'entraînement en rotation. On parle alors d'auto-forage de la contre dépouille. Dans ce cas, la bague d'expansion pourra être agencée en conséquence pour recevoir un organe intermédiaire d'entraînement en rotation, la coopération de l'organe d'entraînement et de bague pouvant être assurée, par exemple, par assemblage d'une patte sur l'un et d'une encoche dans l'autre. Dans ce cas toujours, on fait l'économie de l'étape d'ancrage illustrée sur la figure 6B. C'est surtout à la suite de l'auto-forage de la contre-dépouille qu'un petit jeu peut se créer, qui est éliminé ensuite par traction sur la cheville, comme indiqué plus haut.

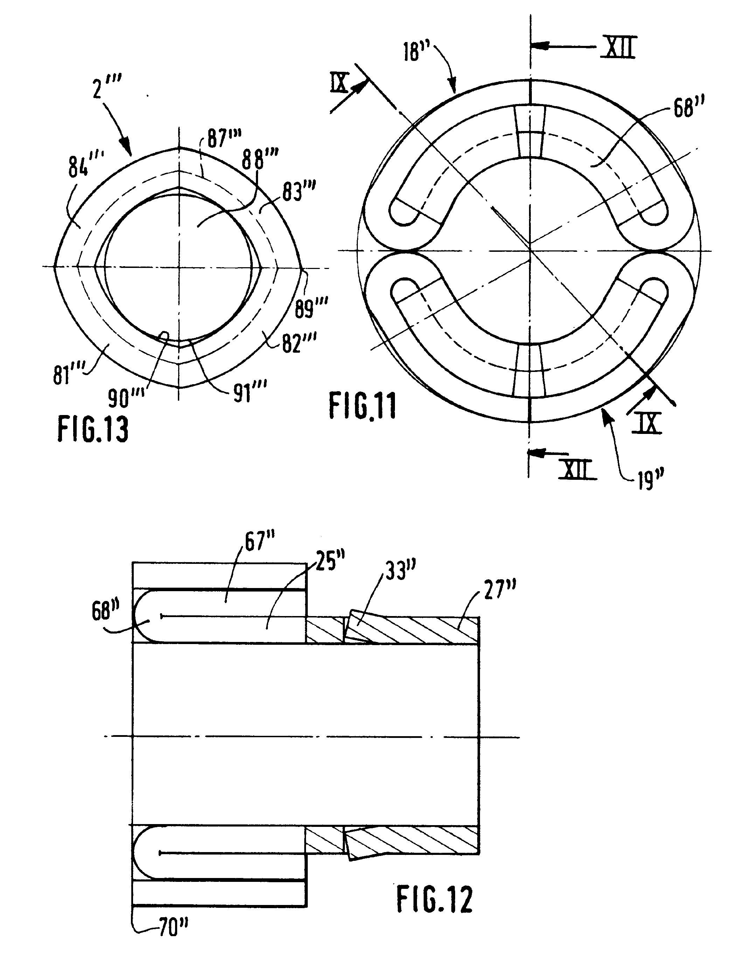

La cheville, dont la bague d'expansion est représentée sur la figure 13, ne se distingue au plus structurel de celle de la figure 1 que précisément par sa bague d'expansion 2'''. Son assemblage et son ancrage restent identiques à ceux de la cheville 1 de la figure 1.

La bague d'expansion 2''' comprend ici quatre quarts de coquille 81'''-84''' pleins, ou monoblocs, assemblés comme les demis-coquille 18, 19 de la cheville 1 ou les quarts de coquille 51'-54' de la cheville 1'.

Il est inutile de représenter la cheville de cette bague 2''' puisque sa représentation serait quasi-identique à celle de la cheville 1 de la figure 1, seule la surface de séparation des deux épaisseurs des pattes d'expansion de la bague ne devant pas apparaître.

Les quarts de coquille 81'''-84''' ont été obtenus par fendage d'un élément tubulaire, présentant un épaulement extérieur 87''', correspondant à l'épaulement 24 de la bague 2, fendu ici en quatre éléments identiques. Le diamètre intérieur de cet élément tubulaire de départ est supérieur au diamètre de la portion de tige de traction 88‴ recevant les quarts de coquille, et donc son diamètre extérieur est supérieur au diamètre du trou d'ancrage, pour que, disposés autour de la tige de traction, les quarts de coquille 81‴-84‴ soient jointifs. L'intérêt de cet caractéristique, selon donc laquelle le rayon de courbure de la paroi intérieure 90‴ des éléments d'expansion est supérieur à celui de la surface 91‴ de la tige de traction les recevant, et de ne pas perdre de surface d'expansion qui sinon aurait été perdue en face des espaces correspondant aux fentes.

Comme le rayon intérieur des quarts de coquille 81‴-84‴ est plus grand que le rayon de la tige de traction 88‴, les quarts de coquille sont en contact avec la tige de traction chacun selon une ligne parallèle à l'axe mais ils forment deux à deux des arêtes de coupe 89‴ qui assurent à l'entretoise un passage libre dans le trou d'ancrage.

Comme moyens de verrouillage des éléments d'expansion sur l'entretoise, ces éléments 81‴-84‴ comportent ici, non plus des ergots, mais des aspérités obtenues par moletage.

## Revendications

1. Cheville pour trou d'ancrage (14) à contre-dépouille (40), comportant une tige de traction (1) pourvue d'une extrémité (4)de fixation d'une pièce (6) à fixer et d'une extrémité conique d'ancrage (13) destinée à être disposée au moins en partie dans la contre-dépouille (40) du trou d'ancrage, plusieurs éléments (18,19) à patte expansible (22,23) formant une bague d'expansion (2), une entretoise tubulaire (3) autour de la tige de traction (1), prenant appui contre un épaulement annulaire transversal (24) ménagé sur la bague d'expansion (2), et destinée à entraîner les pattes expansibles (22,23) de la bague (2) en coopération avec l'extrémité conique (13) de la tige de traction (1) pour provoquer leur expansion dans la contre-dépouille (40), caractérisée par le fait que les éléments (18,19) de la bague d'expansion, du côté opposé à leur patte expansible, s'étendent, au-delà de l'épaulement annulaire transversal (24), entre l'entretoise (3) et la tige de traction (12) en offrant à l'entretoise (3) une surface d'appui cylindrique longitudinale (10) de longueur sensiblement comparable à celle des pattes d'expansion (22,23), la zone de l'épaulement annulaire transversal (24) formant zone (31,32) d'articulation des pattes d'expansion (22,23).

2. Cheville selon la revendication 1, dans laquelle l'épaisseur transversale des pattes d'expansion (22,23) est égale à au moins deux fois celle de jambes de maintien (20,21) les prolongeant entre l'entretoise (3) et la tige de traction (12).

3. Cheville selon la revendication 2, dans laquelle les jambes de maintien (20,21) de la bague d'expansion sont maintenues entre l'entretoise (3) et une portion de section rétrécie (12) de la tige de traction (1).

4. Cheville selon l'une des revendications 2 et 3, dans laquelle l'épaisseur transversale de l'entretoise (3) est égale à la différence entre l'épaisseur des pattes d'expansion (22,23) et l'épaisseur des jambes de maintien (20,21) de la bague d'expansion.

5. Cheville selon la revendication 4, dans laquelle l'entretoise (3) comporte un épaulement annulaire intérieur (17) délimitant un espace annulaire de réception des jambes de maintien (20,21) de la bague d'expansion.

6. Cheville selon l'une des revendications 1 à 5, dans laquelle l'extrémité frontale (16) de l'entretoise (3) est tronconique.

7. Cheville selon l'une des revendications 1 à 6, dans laquelle la bague d'expansion comporte des éléments de coquille (18,19 ; 51′-54′ ; 18″, 19″) réalisés, chacun, à partir d'un flanc de tôle découpé, en partie replié et roulé.

8. Cheville selon la revendication 7, dans laquelle le flanc de tôle d'origine de chaque élément de coquille (25″, 27″, 67″) est découpé et replié pour former des bords arrondis intérieurs (68″) de coopération avec l'extrémité conique d'expansion (13″) de la tige de tractin (1″).

9. Cheville selon l'une des revendications 7 et 8, dans laquelle les pattes d'expansion (22,23 ; 22″, 23″) comportent une arête extérieure vive (70,70″).

10. Cheville selon l'une des revendications 1 à 6, dans laquelle la bague d'expansion (2″) comporte des éléments de coquille (81‴-84‴) monoblocs.

11. Cheville selon la revendicatin 10, dans laquelle les éléments de coquille (81‴-84‴) ont été obtenus par fendage d'un élément tubulaire.

12. Cheville selon l'une des revendications 10 et 11, dans laquelle le rayon de courbure de la paroi intérieure (90‴) des èlements de coquille (81‴-84‴) est supérieur à celui de la surface (91‴) de la tige de traction (88‴) les recevant.

13. Cheville selon l'une des revendications 1 à 12, dans laquelle sont prévus des moyens (33) d'assemblage de l'entretoise (3), de la bague d'expansion (2) et de la tige de traction (1).

## Patentansprüche

1. Dübel für eine Ankerbohrung (14) mit einer Hinterschneidung (40), der eine Zugstange (1), welche mit einem Ende (4) zur Befestigung eines zu befestigenden Teils (6) sowie mit einem konischen Ende (13) zur Verankerung versehen ist, das dazu bestimmt ist, zumindest teilweise in der Hinterschneidung (40) der Ankerbohrung angeordnet zu werden, mehrere Elemente (18, 19) mit spreizbaren Fortsatz (22, 23), die einen Spreizring (2) bilden, und ein um die Zugstange (1) angeordnetes röhrenförmiges Zwischenstück (3) umfaßt, das an einer an dem Spreizring (2) vorgesehenen transversalen ringförmigen Schulter (24) zu liegen kommt und dazu bestimmt ist, die spreizbaren Fortsätze (22, 23) des Rings (2) vorwärts zu treiben, so daß sie mit dem Konischen Ende (13) der Zugstange (1) wirken, um ihr Auseinanderdriften in der Hinterschneidung (40) zu bewirken, dadurch gekennzeichnet, daß sich die Elemente (18, 19) des Spreizrings auf der ihren spreizbaren Fortsätzen entgegengesetzen Seite jenseits der transversalen ringförmigen Schulter (24) zwischen dem Zwischenstück (3) und der Zugstange (12) erstrecken, wobei sie dem Zwischenstück (3) eine longitudinale zylindrische Auflagefläche (10) bieten, die eine im wesentlichen mit der Länge der Spreizfortsätze (22, 23) vergleichbare Länge besitzt, wobei der Bereich der transversalen ringförmigen Schulter (24) eine Gelenkzone (31, 32) für die Spreizfortsätze (22, 23) bildet.

2. Dübel nach Anspruch 1, bei dem die Querdicke der Spreizfortsätze (22, 23) mindenstens der zweifachen Dicke der sie zwischen dem Zwischenstück (3) und der Zugstange (12) fortsetzenden Halteglieder (20, 21) entspricht.

3. Dübel nach Anspruch 2, bei dem die Halteglieder (20, 21) des Spreizrings zwischen dem Zwischenstück (3) und einem Teil (12) der Zugstange (1), der einen verengten Querschnitt aufweist, gehalten werden.

4. Dübel nach einem der Ansprüche 2 und 3, bei dem die Querdicke des Zwischenstücks (3) der Differenz zwischen der Dicke der Spreizfortsätze (22, 23) und der Dicke der Halteglieder (20, 21) des Spreizrings entspricht.

5. Dübel nach Anspruch 4, bei dem das Zwischenstück (3) eine innere ringförmige Schulter (17) aufweist, die einen ringförmigen Raum abgrenzt, der zur Aufnahme der Halteglieder (20,21) des Spreizrings dient.

6. Dübel nach einem der Ansprüche 1 bis 5, bei dem das stirnseitige Ende (16) des Zwischenstücks (3) kegelstumpfförmig ist.

7. Dübel nach einem der Ansprüche 1 bis 6, bei dem der Spreizring Schalenelemente (18, 19; 51'-54'; 18", 19") umfaßt, die jeweils aus einer gestanzten, zum Teil umgefalzten und rundgebogenen Blechflanke bestehen.

8. Dübel nach Anspruch 7, bei dem die Ursprungsblechflanke jedes Schalenelements (25", 27", 67") so gestanzt und gefalzt ist, daß abgerundete innere Kanten (68") gebildet werden, die mit dem konisch erweiterten Ende (13") der Zugstange (1") zusammenwirken.

9. Dübel nach einem der Ansprüche 7 und 8, bei dem die Spreizfortsätze (22, 23; 22", 23") eine scharfe äußere Kante (70, 70") aufweisen.

10. Dübel nach einem der Ansprüche 1 bis 6, bei dem der Spreizring (2''') einstückige Schalenelemente (81'''-84''') umfaßt.

11. Dübel nach Anspruch 10, bei dem die Schalenelemente (81'''-84''') durch Spaltung eines röhrenförmigen Elements hergestellt wurden.

12. Dübel nach einem der Ansprüche 10 und 11, bei dem der Krümmungsradius der inneren Wand (90''') der Schalenelemente (81'''-84''') größer ist als derjenige der Oberfläche (91''') der von ihnen aufgenommenen Zugstange (88''').

13. Dübel nach einem der Ansprüche 1 bis 12, bei dem Mittel (33) zum Zusammenfügen des Zwischenstücks (3), des Spreizrings (2) und der Zugstange (1) vorgesehen sind.

## Claims

1. Bolt for an anchoring hole (14) with an undercut (40), comprising a traction shaft (1) provided with an extremity (4) for fixing a piece (6) to be secured and an anchoring conical extremity (13) intended to be disposed at least partially inside the undercut (40) of the anchoring hole, several elements (18,19) with expansible leg (22,23) forming an expansion ring (2), a tubular brace (3) around the traction shaft (1) taking support against a transversal ring-shaped shoulder (24) provided on the expansion ring (2) and intended to drive the expansible legs (22,23) of the ring (2) in cooperation with the conical extremity (13) of the traction shaft (1) to cause their expansion in the undercut (40), characterized in that the elements (18,19) of the expansion ring, on the side opposite their expansible leg, extend, beyond the transversal ring-shaped shoulder (24), between the brace (3) and the traction shaft (12) by offering the brace (3) a longitudinal cylindrical bearing surface (10) whose length is roughly comparable with that of the expansible legs (22,23), the zone of the transversal ring-shaped shoulder (24) forming an articulation zone (31,32) for the expansible legs (22,23).

2. Bolt as claimed in claim 1, wherein the transversal thickness of the expansible legs (22,23) is equal to at least twice that of the holding legs (20,21) extending over them between the brace (3) and the traction shaft (12).

3. Bolt as claimed in claim 2, wherein the holding legs (20,21) of the expansion ring are kept between the brace (3) and a constricted sectional portion (12) of the traction shaft (1).

4. Bolt as claimed in one of claims 2 and 3, wherein the transversal thickness of the brace (3) is equal to the difference between the thickness of the expansible legs (22,23) and the thickness of the holding legs (20,21) of the expansion ring.

5. Bolt as claimed in claim 4, wherein the brace (3) comprises an internal ring-shaped shoulder (17) delimitating a ring-shaped space for receiving the holding legs (20,21) of the expansion ring.

6. Bolt as claimed in one of claims 1 to 5, wherein the front end (16) of the brace (3) is truncated.

7. Bolt as claimed in one of claims 1 to 6, wherein the expansion ring comprises shell elements (18,19;51'-54';18",19") each obtained from a flank of sheet-metal cut, partly rolled and folded.

8. Bolt as claimed in claim 7, wherein the original flank of sheet-metal of each shell element (25",27",67") is cut out and folded to form the internal rounded edges (68") for cooperating with the expansion conic extremity (13") of the traction shaft (1").

9. Bolt as claimed in one of claims 7 and 8, wherein the expansible legs (22,23;22",23") comprise an external sharp edge (70,70").

10. Bolt as claimed in one of claims 1 to 6, wherein the expansion ring (2''') comprises one piece shell elements (81'''-84''').

11. Bolt as claimed in claim 10, wherein the shell elements (81'''-84''') have been obtained by sliting a tubular element.

12. Bolt as claimed in one of claims 10 and 11, wherein the radius of the inner wall (90''') of the shell elements (81'''-84''' is greater than that of the surface (91''') of the traction shaft (88''') receiving them.

13. Bolt as claimed in one of claims 1 to 12, wherein means 33 are provided for assembling the brace (3), the expansion ring (2) and the traction shaft (1).

FIG.1

FIG.2

FIG.3

FIG.4

FIG.5

FIG.8

FIG.6A    FIG.6B    FIG.6C    FIG.6D    FIG.6E

EP 0 367 672 B1

FIG.7

FIG.9

FIG.10

12

FIG.13

FIG.11

FIG.12